# EUROPEAN PATENT APPLICATION

(11) **EP 0 600 722 A1**
(43) Date of publication of application: **08.06.1994**
(21) Application number: 93309594.5
(22) Date of filing: 01.12.1993
(51) Int. Cl.: B65D 73/00, B65D 85/671

(54) **Pack structure, especially for rolls, and blank therefore**

(30) Priority: 01.12.1992 GB 9225120
(71) Applicant: SELLOTAPE GB LIMITED, Dunstable, Beds. LU5 4TP (GB)
(72) Inventor: Evans, Jane Suzann, Wiltshire SN4 0JF (GB)
(74) Representative: Clifford, Frederick Alan

(57) **Abstract**

A card or polymer pack for a cylindrical unit such as a roll of pressure-sensitive adhesive tape or foam strip (9) has a central base region between fold lines (3,3a); and side walls (12), with sloping portions joining them in face-to-face adherence at tabs (11). Cuts (4,4a) define leaves (10,10a) on at least one face although such leaves can be cut off on one face to display product. The roll is held between the base and the edges of the orifices left by cut-out leaves (10,10a). The pack is protective, hangable or stackable, susceptible of easy opening, tamper-evident, recyclable and (especially as card) biodegradable. The pack can be adapted to package different numbers of sizes of packed rolls, of different proportions and shapes; other units than tape rolls can also be packaged.

## Description

This invention relates to packaging, and in particular relates to a pack structure, and the corresponding blank, typically fabricated from card or polymer sheet, from which the structure is folded. The structure in accordance with the invention can be used for unit packaging of a wide variety of units, or can be used as a multipack construction. It is however most conveniently embodied as a pack for a cylindrical unit, especially for a cylindrical unit the diameter of which is rather greater than its depth.

In particular, the pack is suitable for the packaging of rolls of pressure sensitive adhesive tapes and adhesive foam strips. For convenience of discussion, therefore, reference will be made to such packaging.

In the packaging of individually small units, of which rolls of adhesive tape are an example, it is commonplace to utilise a backing card at point of sale. Typically, the unit is held to this backing card by an overlying transparent wrapper such as a film wrap or a more rigid blister pack. The card itself forms both a surface for more prominent display of these small articles, and a hindrance to pilfering since its larger size makes it more difficult to conceal.

Such well known types of packs tend to be expensive having regard to the cost of the enclosed articles, and are in some cases difficult to open. Also, the materials of construction, being a mixture of polymer and card, are not simply recyclable without separation and, at least as far as the relatively rigid blister pack polymer is concerned, are not biodegradable when disposed of. Moreover, such packs are typically suspended by the card, and are not themselves standable or stackable along a shelf. They also present difficulties of cartoning for wholesale supply.

The present invention sets out to overcome these disadvantages by providing a pack made of cellulosic fibrous material, more specifically card, (or possibly of polymer sheet) of such a nature as to be protective to the enclosed unit; hangable or stackable; capable of easy opening; tamper evident; and (when made of card in particular) easily recyclable or biodegradable.

In one aspect therefore the invention consists in a pack having a flat base, two flat side walls folded one up from each of two respective parallel fold lines delimiting the flat base, two portions each constrained to slope inwardly from an upper part of each respective flat side wall, and a tab portion folded to extend upwardly as a face to face mutually adhered continuation of the respective sloping portions; in which a transverse cut extends where the upper part of each flat side wall joins the adjacent sloping portion, each such cut starting inward of one edge of the flat wall, passing upwards and thereafter passing downwards again to terminate inwards of the other edge of the respective wall, so that an orifice is formed on each sloping portion, whereby a unit with, in maximum or uniform vertical cross-section, a flat base edge, straight side edges, and a joining top edge, may be held directly or indirectly on the base and within the flat side walls with joining top edge line held within the orifices on the sloping portions.

Preferably the flat side walls are vertical.

Each such cut may define a leaf extending generally in continuation of the adjacent flat wall. Alternatively, one such cut defines a leaf in this manner and a further cut extends between the ends of, and below, the first cut, to remove part or all of any leaf, optionally with material from the upper part of the side wall. This will provide a display of part of the packed unit.

Usually between each leaf-defining cut and the respective flat side wall edge is a fold line, although it is possible to operate without such a line so as to give a generally curved appearance at this location.

The cuts are normally arcuate, and in a preferred embodiment are part circular whereby a cylindrical unit may be held with its curved face directly on the base, its flat faces contacting the flat side walls of the pack, and edge portions of its upper periphery received and retained in the orifices of the sloping portions.

In preferred embodiments the maximum height and width of each flat side wall are essentially equal to the diameter of the circular arcs. The tab moreover is normally centrally located, although can be otherwise positioned. Usually it will have an orifice to permit suspension of the pack, but it is an advantage of the pack that the flat base provides standability.

In another aspect the invention consists in a blank for forming a pack as described above, comprising a rectangle of card or polymeric sheet material with base fold lines scored or folded to either side of a notional transverse central line to define the width of the pack base; tab fold lines also scored or folded to either side of the notional transverse lines, each at a distance from the respective nearer base fold lines to define the extent of a side wall and a sloping portion; and cuts extending across the blank, each cut starting inward of one edge of the blank, passing in a direction towards the tab fold lines, and returning to the same distance from the tab fold line as the origin, to terminate short of the adjacent blank edge.

Preferably a transverse fold line is located between each end of each cut and the respective adjacent blank edge. Each such cut may define a leaf, and a further cut may be located to detach part of all of one defined leaf optionally together with an adjacent portion of a side wall. Indeed, portions of both leaves may be be so removed but usually one leaf is present at least in part.

A yet further aspect of the invention consists in the combination of the pack as described above with a roll of pressure sensitive adhesive tape or a roll of pressure sensitive adhesive foam strip enclosed and retained therein with its curved face directly on the base, its flat faces contacting the flat side walls of the pack and edge portions of its upper periphery received and retained in the orifices.

As explained in more detail below, the consequence of folding the sloping portions into their pack configuration is to cause the transverse cut edge of the leaf orifice to approach the base. In practice, this movement is small, but the slightly diminished dimension exerts a useful retaining and positioning function on the roll.

In another form of this aspect of the invention there are provided in combination with a pack two rolls of pressure-sensitive adhesive tape enclosed and retained therein: a lower roll with its curved face on the base, and its flat faces contacting the flat side walls of the pack; and an upper roll supported indirectly on the base by having by its curved face upon the upper part of the curved face of the lower roll, its flat faces contacting the flat side walls of the pack, and edge portions of its upper periphery received and retained in the orifies.

In yet another form of this aspect of the invention the versatility of the concept is exhibited by providing a pack and a roll of pressure-sensitive adhesive tape or a roll of pressure-sensitive adhesive foam strip enclosed and retained therein with a flat face on the base, curved faces contacting the flat side walls of the pack and edge portions of its upper flat periphery received and engaged in the orifices.

The invention will be further described with reference to the accompanying drawings, in which:
Fig. 1 shows a package blank which can be folded into an embodiment of the invention;
Fig. 2 shows in perspective the pack folded from the blank of Figure 1, containing a roll of pressure-sensitive adhesive tape; and
Figs 3 to 15 show other possible embodiments of the present invention.

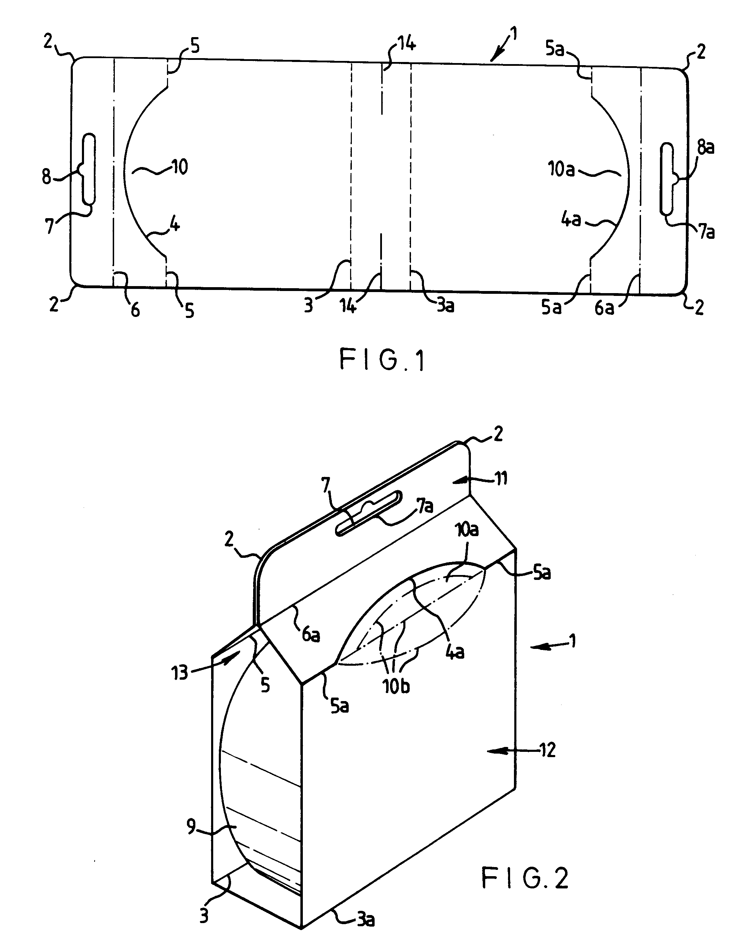

Fig. 1 shows an elongate rectangle of card 1 with radiussed corners 2. Equispaced about the notional centre line 14, across the long dimension of the card, are scored or impressed transverse fold lines 3 and 3a facilitating upward folding of the blank as shown. Also equispaced, but located successively towards the outer edges of the card are arcuate cuts 4 and 4a with scored or impressed upward fold lines 5 and 5a extending from the ends of the cuts across the margins to the nearer blank edge; scored or impressed downward fold lines 6 and 6a; and transversely extending apertures 7 and 7a with rounded central extensions 8 and 8a, constituting a "Eurohole".

Dimensions of such a pack may of course vary in detail. By way of example the overall card length and width may be 315 mm and 106 mm respectively. The distance between fold lines 3 and 3a is conveniently 25 mm, the distance between fold lines 5 and 5a is 191 mm, and that between fold lines 6 and 6a is 245 mm. The arcuate cuts 4 and 4a are then preferably circular arcs, (terminating at each respective end 10 mms from the card long edges), of respective notional circles 106 mm in diameter centred 53 mm from each respective fold line 3 and 3a. As explained in more detail below, the package is preferably used for packaging rolls of pressure-sensitive adhesive tape, and the dimensions will therefore generally reflect the dimensions of such material, the distance 3 to 3a representing roll width (typically 12 mm, 25mm, and other standard sizes), and the diameter of the circular arcs representing standard roll diameters.

When folded, adhered, and in use the packaging resembles that shown in perspective form in Fig. 2, containing a roll of pressure-sensitive adhesive tape. The blank 1 as shown has been folded around a 25 mm-width roll 9 which stands on the central region between fold lines 3 and 3a, so that the arcuate cuts 4, 4a allow the leaf of card material at 10, 10a to remain in the general plane of the respective walls, i.e. major faces, of the package as the top portion slopes inwards to meet the mutually adhered end tab zones 11, (i.e. beyond lines 6 and 6a), preferably sealed with an adhesive which can be a hot melt, latex or cold seal adhesive.

It will be clear to the man skilled in the art that although this embodiment shows scored or impressed fold lines 5 and 5a, these could if desired be omitted. The folded package would then have a slightly different appearance at the upper portion but still preserve the characteristics of the present invention. It will moreover be clear that the holes 7 and 7a can be of any suitable configuration, as can extensions 8 and 8a, their combined purpose being to provide apertures for hanging and locating the pack on a display rail.

The package as shown, applied to the packaging of pressure-sensitive adhesive tape, has numerous advantages over prior art display and storage packages for this purpose.

It can be made of recyclable, or biodegradable, card material, or of suitable polymer sheet material.

There are ample major outer advertising display surfaces on each wall at 12. Moreover, outer tab surfaces at 11 can also be used for advertising or sales information, and can if necessary be increased in area for this purpose. Indeed, it is possible by lengthening the tabs in the "blank" direction or possibly by using a package transversely wider than the tape roll diameter, to unify packaging appearance over a range of sizes if so desired, as discussed in more detail below.

If desired the faces may be cut to remove part of the leaf, and/or one only of the faces can be cut to remove the whole leaf 10, 10a or even part of the upper portion of side wall 12. These possibilities have not been shown on the blank to avoid confusion with fold lines, but are shown in different positions as options on Figure 1, referenced at 10b. Other possible cutaway features are shown in other drawings by reference 10b.

In hanging packages of this type the main mechanical stress is at the hanging aperture e.g. 7,8. In the embodiment shown, however, the material is of double thickness at this point. Thus the side wall thickness at 12 can therefore be reduced without damage at holes 7, 8 and 7a, 8a with consequent cost savings.

The pack is easy to open, since to remove the roll of tape 9 all that is needed is to pull the end regions 11 apart after introducing finger and thumb grip into the space 13. The difference in pack appearance after opening, is considerable and is located at the prominent upper part of the pack, so as to be very tamper-evident. However, because the side faces of the roll 9 are gripped to some extent by the inner faces of the walls 12 of the pack, and more especially because the roll 9 is dimensioned to fit between the base (between 3 and 3a) and the edges of cuts 4,4a, casual or accidental removal or loss from the carton is prevented.

It is moreover advantageous that the side faces of the roll are protected against impact damage in transit and display by the resistant major faces 12 of the pack. Also, the package is, if desired, standable on its bottom face (instead of, or as well as, being hangable) and to assist this the base could if desired be provided with additional fold configurations over at least its end portions i.e. at 14. As a corollary, a group of such packages are easily packable into cartons or stackable for wrapping, manually or automatically.

The package can also be used for such rolls 9 which are themselves film wrapped to guard against oxidative deterioration.

Figs 1 and 2 as described above show a preferred embodiment of the invention. However, modifications can be made, both for packaging of pressure-sensitive adhesive tapes, and for more general packaging purposes, and preserve at least some of the advantages discussed above.

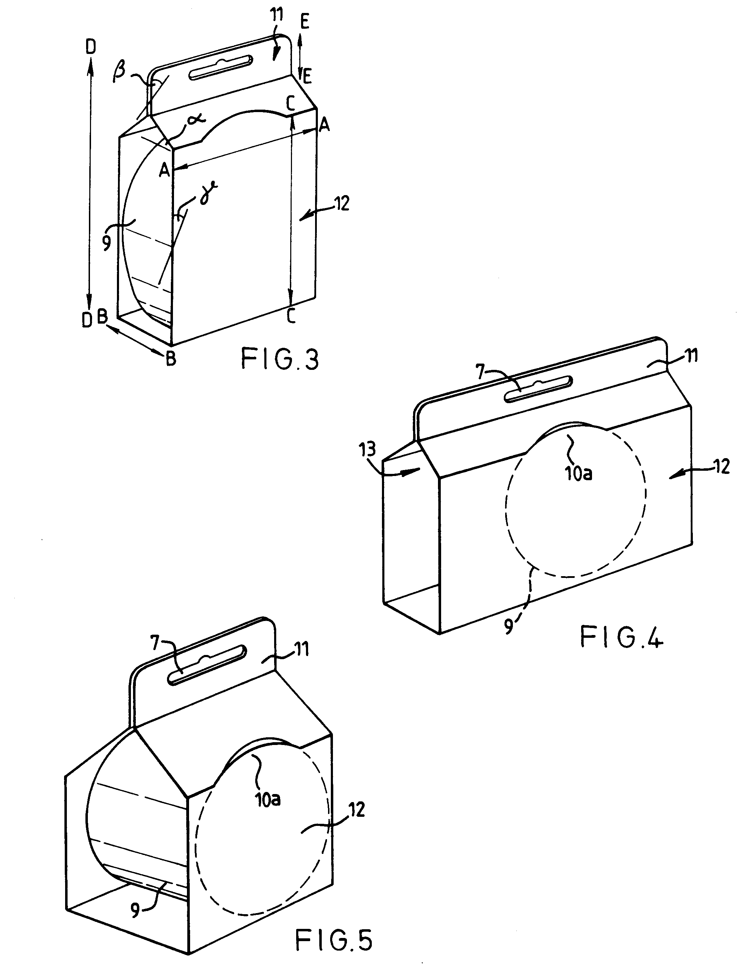

Fig. 3 shows a package generally as in Fig. 2. The man skilled in the art will realise that the basic concept of this package can be preserved even though the facility exists of altering dimensions and angles as shown on the diagram. Thus the pack can be made wider (arrows A) or deeper (arrows B). The length of pack face 12 i.e. between folds 3, 3a and 5, 5a can vary, and the edge lines of the tab faces 11 or pack faces 12 can also be at other than a right angle to the folds (angles β and γ respectively). The angle α of the sloping portion can also be varied. Moreover, the cuts 4, 4a need not be arcuate (provided that they are each continuous and reach higher up the pack in their middle regions than at their ends) or if arcuate, can have variable curvature, provided than in each case some upstanding leaf 10, 10a is defined.

Fig. 4 shows one possible effect of modifying the dimensions. Pack width (A-A of Fig. 3) could if desired be greater than the tape roll 9 diameter. The tape could be central, as shown; or located at one end. Such an increase in pack width allows for the possibility of twin-pack packages, possibly with differently shaped units, as discussed below. It would allow of a multipack presentation, perhaps with units held at each end defining between themselves further packaging space then not relying directly on package interference for its retentive effect.

Fig. 5 shows a pack in accordance with the invention of a deeper configuration e.g. for holding a wide roll of tape. The principle used is exactly that of Figs 2 or 3, but distance B-B has been increased.

Because of the facility provided by the concept of dimension changes, it is possible if required to use the packaging generally to unify the point of sale presentation of different roll sizes of the same product.

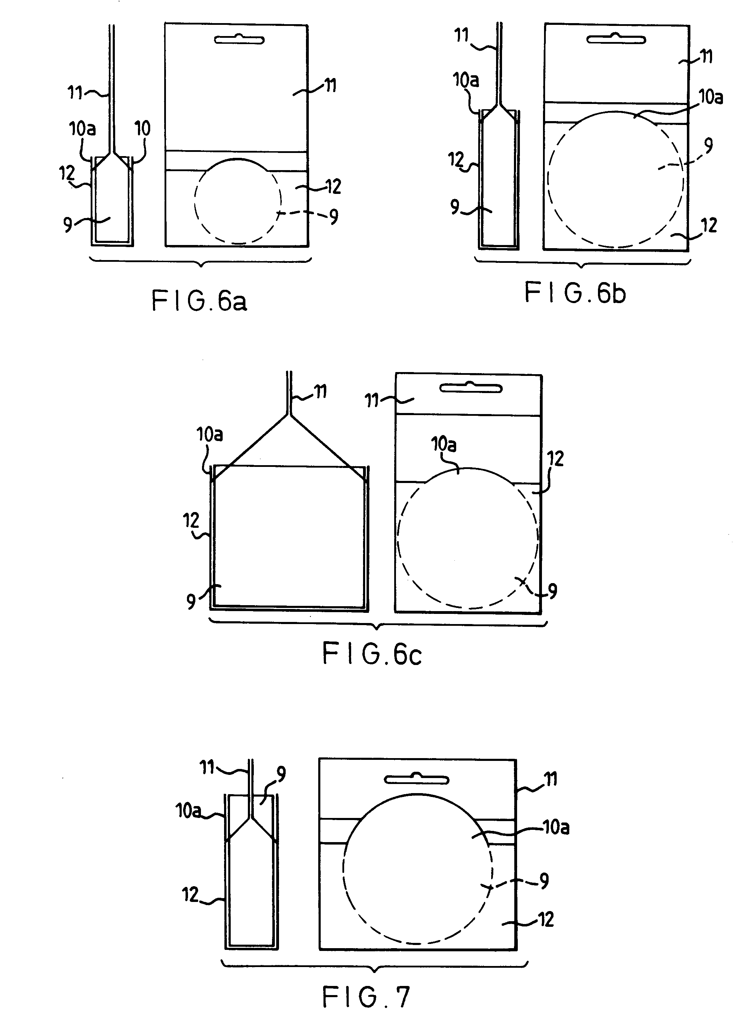

Fig. 6a relates to Fig.4 showing diagrammatically a face view and side view of that package. A not dissimilar appearance would be given by a twin-pack.

Fig. 6b shows such a pack containing a diametrically larger roll, in both face and side view. Essentially, dimensions C-C and E-E are changed, but D-D is unchanged.

Fig. 6c shows such a pack but now containing a wide roll, as in Fig. 5. Dimension D-D is unchanged, as is dimension C-C,. but the tab length E-E is greatly different.

Overall, however, there is a considerable unity of pack appearance from the front, prominent, face for point of sale purposes.

Fig. 7 shows diagrammatically a rather less preferred type of modification in which distance C-C is diminished proportionally compared to Fig. 5 or 6b. Usually, the point which the arcuate cut 4,4a reaches along the blank i.e. the depth of the leaf is not greatly in excess of that defined by lines 5, 5a, i.e. the ends of the cut. Thus, the opening defined, when the blank is folded is not large, and typically falls completely within the sloping face of the pack. The actual distance of the cut edge 4,4a, from the standable base, is less on the folded pack than on the blank, but the difference is usually small, and merely help the general snugness and retentivity of the pack. If the arcuate cut is extensive, and defines an extensive leaf, leaving an orifice extending a significant proportion of the way up the sloping surface, or even into the adhered zone 11, then care must be taken when dimensioning the blank to compensate for the folded and unfolded differences of distance from the base. Nonetheless, such modification although needing careful consideration and calculation is still possible.

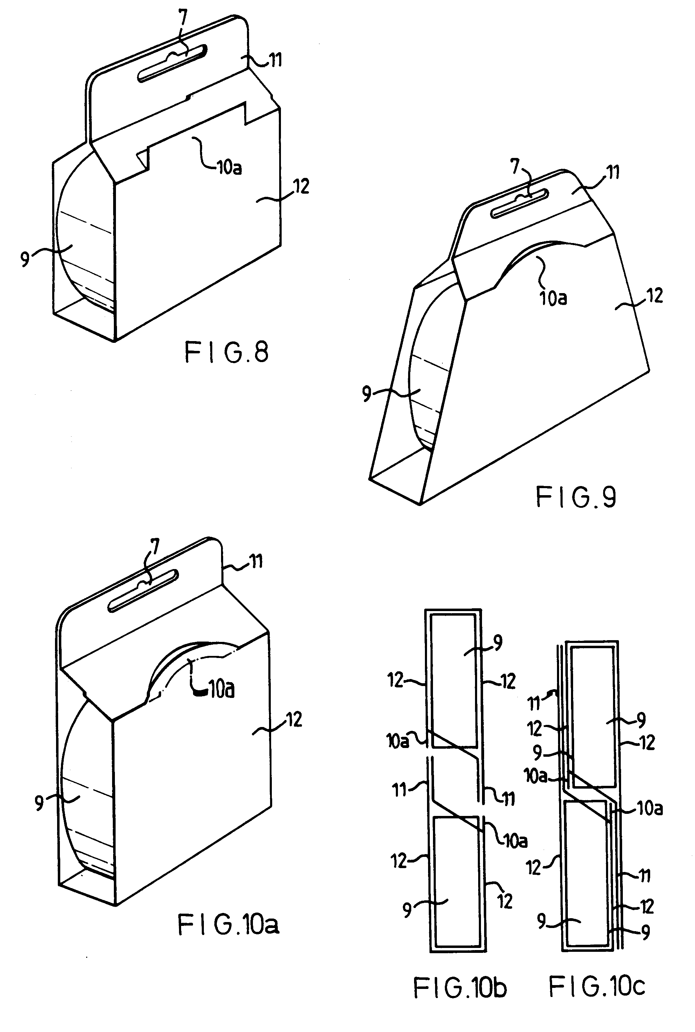

Fig. 8 shows another somewhat less preferred variant where the tab 10, 10a defined by the cuts 4, 4a is not of arcuate perimeter but is rectangular. This is still effective in retaining a roll of tape or a like shaped article, but is not optimum in shape for this purpose. Nonetheless it can be used and may be necessary with some shapes of packaged unit.

Fig. 9 shows diagrammatically how angles βand γ can be altered to give a different package appearance. Such alteration also provides the possibility of forming flaps to cover the open ends of the pack.

Fig. 10 shows in diagrammatic perspective view a possible variant in which the hanging tab 11 is not centrally located, but forms a general continuation of one pack face 12. Other features of the pack are as in Fig. 2. Such packs can if desired jointly be packed e.g. for cartoned transport or storage, as shown in the diagrammatic side view of Fig. 10a. Indeed if the tab 11 were lengthened a paired packing can be envisaged as shown in similar view in Fig. 10b.

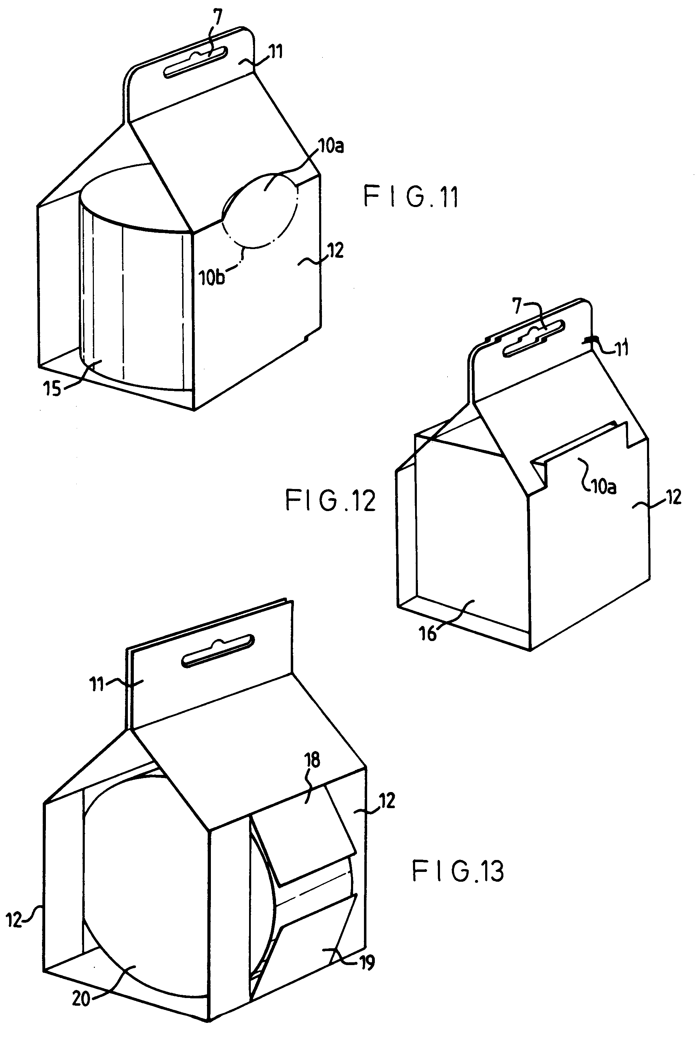

All of the packages as shown in Figs. 1 to 10 have been utilised to hold a roll of tape, or similar cylindrical shape, on its side. However, the pack could also be used for a cylindrical article 15 standing on one end, as shown in Fig. 11. The packaging is generally similar to that of, for example, Fig. 5 although in this case a rectangular defined cut leaf is preferable. If desired, moreover, a cylinder held transversely (i.e. as by turning the roll of Fig. 5 through 90 about a vertical axis) could also be accommodated, but is not shown. Fig. 12 shows how the pack could be used for a unit 16 shaped as a parallelipiped, again with a square upstanding leaf 10a at the cut region. Indeed, a pack of this nature could even be used for flat-sided articles the sides of which taper upwards or downwards.

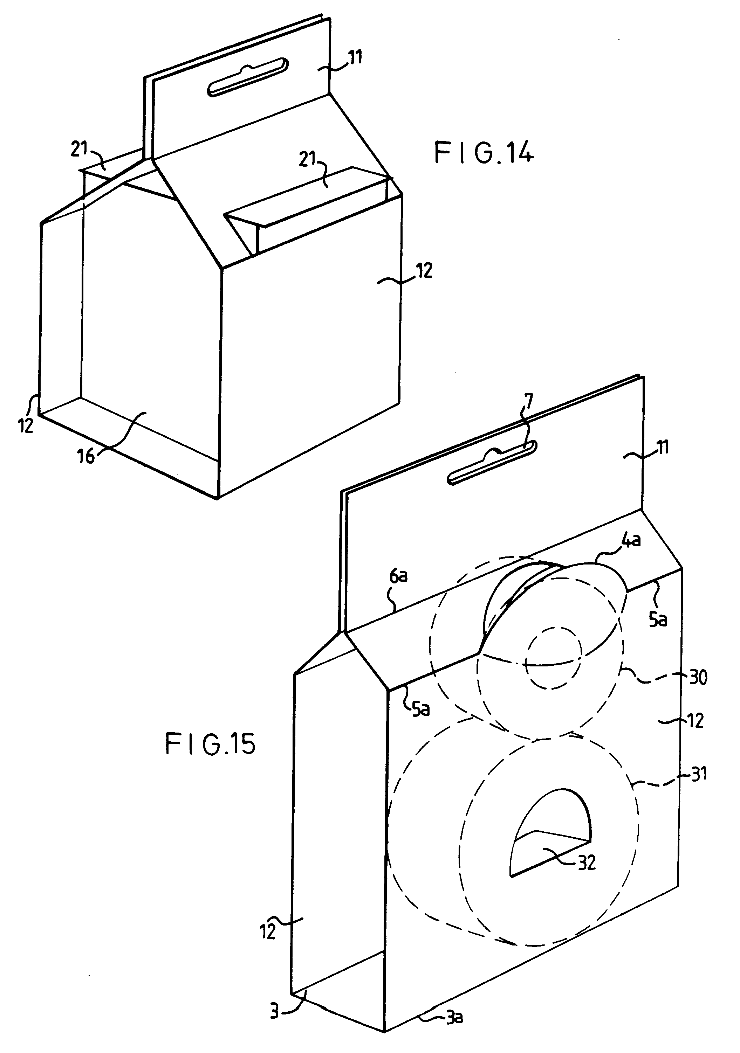

In a variant of the invention, as shown in Figs. 13 and 14, the leaf extends downwards rather than upwards.

Fig. 13 shows a pack in accordance with an embodiment of this variant. In this pack the base, side walls 12, and tab 11 are similar to those shown, for example in Figs. 11 and 12 except that (on each wall, a first leaf 18 extends downwardly from the ends of its defining cuts, and a second leaf 19 extends upwardly, from near the base. This configuration is suitable to package a roll or cylindrical unit 20 in the configuration shown.

Fig. 14 is similar to Fig. 12, except that a leaf 21 is cut in the sloping portion and extends outwardly or downwardly, i.e. conversely to that shown in Fig. 12.

Fig. 15 shows a further embodiment of packaging in accordance with the invention. On this drawing, two rolls 30 and 31, a combination useful for certain specialised tasks e.g. temporary pipe or hose repair, are held so that the upper roll 30 is supported indirectly on the base by lower roll 31. Other aspects of the packaging are as described above with the exception of leaves 32 formed to hold the lower roll in a central position when pushed inwards.

## Claims

1. A pack (1) having a flat base, two flat side walls folded one up from each of two respective parallel fold lines (3, 3a) delimiting the flat base, two portions each constrained to slope inwardly from an upper part of each respective flat side wall (12), and a tab portion (11) folded (6, 6a) to extend upwardly as a face to face mutually adhered continuation of the respective sloping portions; in which a transverse cut (4, 4a) extends where the upper part of each flat side wall joins the adjacent sloping portion, each such cut starting inward of one edge of the flat wall, passing upwards , and thereafter passing downwards again to terminate inwards of the other edge of the respective wall, so that an orifice is formed on each sloping portion, whereby a unit (9) with, in maximum or uniform vertical cross-section, a flat base edge, straight side edges, and a joining top edge, may be held directly on indirectly on the base and within the flat side walls within joining top edge line heldin with the orifices on the sloping portions.

2. A pack as claimed in claim 1 in which each such cut (4, 4a) defines a leaf (10,10a) extending generally in continuation of its adjacent flat wall.

3. A pack as claimed in claim 1 in which one such cut (4,4a) defines a leaf (10,10a) extending generally in continuation of its adjacent flat wall, and in which a further cut (10b) extends between the ends of and below the other such cut, to remove part or all of any other leaf defined by said other cut, and to display part of the packed unit (9).

4. A pack as claimed in claim 3 in which the said further cut (10b) is shaped to remove material from the upper part of the adjacent flat side wall (12).

5. A pack as claimed in any of claims 1 to 4 in which the flat side walls (12) are vertical.

6. A pack as claimed in any of claim 1 to 5, in which between the end of each cut and the respective flat side wall edge is a fold line (5,5a).

7. A pack as claimed in any one preceding claim in which the cuts (4,4a) are arcuate.

8. A pack as claimed in claim 7 in which the arcuate cuts (4, 4a) are part circular, whereby a cylindrical unit (9) may be held with its curved face directly on the base, its flat faces contacting the flat side walls of the pack, and edge portions of its upper periphery received and retained in the orifices.

9. A pack as claimed in claim 8 in which the maximum height (C-C) and width (A-A) of each flat side wall are essentially equal to the diameter of the circular arcs.

10. A pack as claimed in any one preceding claim in which the tab (11) is centrally located in relation to the depth of the pack.

11. A pack as claimed in any one preceding claim in which the tab has an orifice (7) to permit suspension of the pack.

12. A blank for forming a pack as claimed in any one preceding claim, comprising a rectangle (1) of card or polymeric sheet material, base fold lines (3,3a) scored or folded to either side of a notional transverse central line (14) to define the width of the pack base; tab fold lines (6,6a) also scored or folded to either side of the notional transverse lines, each at a distance from the respective nearer base fold lines (3,3a respectively) to define the extent of a side wall and a sloping portion; and cuts (4,4a) extending across the blank, each cut starting inward of one edge of the blank, passing in a direction towards the tab fold lines (6,6a), and returning to the same distance from the tab fold line as the origin, to terminate short of the adjacent blank edge.

13. A blank as claimed in claim 12 in which a transverse fold line (5,5a) is located between each end of each cut and the respective adjacent blank edge.

14. A blank as claimed in claims 12 or 13 in which each such cut defines a leaf (10, 10a).

15. A blank as claimed in claim 13 in which a further cut (10b) is located to detach part or all of one defined leaf, optionally together with an adjacent portion of a side wall.

16. The combination of a pack as claimed in any of claims 1 to 11 with a roll of pressure-sensitive adhesive tape (9), or a roll of pressure sensitive adhesive foam strip, enclosed and retained therein, with its curved face directly on the base, its flat faces contacting the flat side walls (12) of the pack, and edge portions of its upper periphery received and retained in the orifices.

17. The combination of a pack as claimed in any of claims 1 to 11 with two rolls of pressure-sensitive tape enclosed and retained therein: a lower roll with its curved face on the base, and its flat faces contacting the flat side walls of the pack; and an upper roll supported indirectly on the base by having by its curved face upon the upper part of the curved face of the lower roll, its flat faces contacting the flat side walls of the pack, and edge portions of its upper periphery received and retained in the orifies.

18. The combination of a pack as claimed in any of claims 1 to 11 with a roll of pressure-sensitive adhesive tape or a roll of pressure-sensitive adhesive foam strip enclosed and retained therein with a flat face (15) on the base, curved faces contacting the flat side walls (12) of the pack and edge portions of its upper flat periphery received and engaged in the orifices.
